# EUROPEAN PATENT APPLICATION

(11) **EP 1 965 215 A2**
(43) Date of publication of application: **03.09.2008**
(21) Application number: 08003374.9
(22) Date of filing: 25.02.2008
(51) Int. Cl.: G01N 35/00

(54) **Automatic analyzer**

(30) Priority: 28.02.2007 JP 2007048384
(71) Applicant: Hitachi High-Technologies Corporation, Tokyo 105-8717 (JP)
(72) Inventor: Matsubara, Shigeki, Hitachinaka-shi Ibaraki 312-8504 (JP)
(74) Representative: Strehl Schübel-Hopf & Partner

(57) **Abstract**

An object of the present invention is to achieve analysis with high precision using an automatic analyzer by preventing the contamination of a sample vessel from influencing the precision of analysis, the automatic analyzer using a sample pipetted into the sample vessel to perform the analysis, the sample vessel being repeatedly cleaned and used.

The automatic analyzer of the invention uses a sample pipetted into a sample vessel to perform analysis, the sample vessel being repeatedly cleaned and used. In order to prevent the contamination of the sample vessel, which is caused by the measurement of general biologically-derived samples, from influencing the analysis, the automatic analyzer uses a specified sample vessel to measure standard solution so that the calibration of each analysis item is carried out, and the automatic analyzer does not use the sample vessel in question for analysis of other biologically-derived samples.

## Description

### BACKGROUND OF THE INVENTION

### 1. Field of the Invention

The present invention relates to an automatic analyzer for analyzing components of biologically-derived samples such as blood and urine and more particularly to an automatic analyzer that includes a sample-vessel holding mechanism capable of holding a plurality of sample vessels each of which holds a sample.

### 2. Description of the Related Art

Automatic analyzers for analyzing biologically-derived samples can be classified into analyzers for analyzing a sample by directly dispensing the sample into a reaction vessel from a sample vessel that has been charged into the analyzer for analysis; and analyzers for analyzing a sample by pipetting a sample from a charged sample vessel into another sample vessel in the analyzer and then by dispensing the sample into a reaction vessel from the latter sample vessel. The analyzer which directly dispenses a sample into a reaction vessel from a charged sample vessel has the advantage that its structure is simpler. In contrast, the analyzer which analyzes a sample after dispensing the sample from the charged sample vessel into another sample vessel has a more complex structure. However, it has the advantage that it is possible to reduce the amount of a sample required for analysis to a low level by diluting the sample before the sample is used for the analysis. Another advantage is that, if the dispensed sample is used, it is possible to immediately perform reanalysis when an abnormal state is detected from the result of the analysis.

The latter type of automatic analyzer is disclosed in, for example, JP-A-8-194004.

### SUMMARY OF THE INVENTION

In the case of automatic analyzers that use a pipetted sample to perform analysis, each automatic analyzer includes therein a sample vessel that holds a pipetted sample and that is different from the original sample vessel in which the sample was contained. In the case of automatic analyzers that successively handle a large number of samples, a sample vessel for holding a pipetted sample is cleaned so that the sample vessel can be repeatedly used. However, while the sample vessel is repeatedly used, it is gradually contaminated, which decreases the precision of analysis. Therefore, it is necessary to periodically change sample vessels.

The automatic analyzers calculate and output the concentrations of particular substances (analysis items) included in a sample from a signal value such as the absorbance, which is obtained by the automatic analyzer as a result of the sample analysis. For the purpose of the concentration calculation, the automatic analyzer is required to have a calibration curve of each analysis item. Therefore, a calibrator having a particular concentration is measured so as to calculate the calibration curve from the absorbance, which is the measurement result, and from the concentration of the calibrator. In order to achieve the analysis with high precision, it is necessary to correctly measure the calibrator to calculate the calibration curve. However, if measurements are made with a calibrator pipetted into the sample vessel that is repeatedly cleaned and used, the precision in measurement of the calibrator decreases, resulting in a possibility of not obtaining a correct calibration curve. Accordingly, if concentrations are calculated by incorrect calibration curves, there is a possibility that all measurements will become incorrect.

A problem to be solved by the present invention is to achieve the analysis with high precision by preventing the contamination of a sample vessel from influencing the precision of analysis, with the use of an automatic analyzer including the sample vessel that is repeatedly cleaned and used, the automatic analyzer using a sample pipetted into the sample vessel to perform analysis.

In order to solve the above-described problem, according to one aspect of the present invention, there is provided an automatic analyzer that is configured as follows:

An automatic analyzer including a sample table on which a plurality of vessels are placed each of which temporarily holds a sample and is repeatedly cleaned and used, the automatic analyzer including a control mechanism for controlling a vessel for holding a sample whose concentration is known so that the vessel in question is used separately from a vessel for holding a general sample.

The above-described automatic analyzer may further include specification means for specifying a vessel for holding a sample whose concentration is known.

In addition, the above-described automatic analyzer may further include message issuing means for, on the basis of the measurement result of the sample whose concentration is known, issuing a message for promoting the replacement of the sample vessel used for the measurement.

The above-described sample table does not mean a sample table on which a plurality of samples each being held in a test tube or the like are placed, but means a sample table for temporarily holding a sample to be subjected to dilution or pretreatment. The sample table may have any shape so long as the sample table can temporarily hold a sample. However, it is desirable that the sample table have the same shape as that of a reaction vessel so that the cleaning performed for the purpose of repeated use becomes easier. The sample whose concentration is known refers to a calibrator for calibration, a control sample, or the like. However, irrespective of the names, any sample can be adopted so long as it is a sample whose concentration is known. "Used separately" is synonymous with performing control in such a manner that a general sample is not used. For example, if there are 50 sample vessels in total, the use of the sample vessels is predetermined as follows:
sample vessels numbered 1 through 40 are used to hold general samples; and sample vessels numbered 41 through 50 are used to hold only samples whose concentrations are known. By controlling a sample pipettor in such a manner, the above-described control can be achieved. Besides the control method that uses the sample vessel numbers, it is also possible to adopt a control method comprising the steps of: providing each sample vessel with identification information by use of a bar code, a magnetic recording medium, an IC tag, or the like; and providing a dispensing probe with means for reading out the identification information.

The automatic analyzer according to the present invention can achieve the analysis with high precision by preventing the contamination of a sample vessel caused by other biologically-derived samples from influencing the result of calibration and by thus acquiring correct results of calibration.

In addition, it is also possible to prevent the contamination of a sample vessel from influencing the analysis.

### Brief Description of the Drawings

Fig. 1 is a diagram schematically illustrating the overall configuration of an automatic analyzer according to a first embodiment of the present invention;
Fig. 2 is a diagram illustrating an example of a setting screen used to set test sample vessel numbers for standard solution use only;
Fig. 3 is a diagram schematically illustrating the overall configuration of an automatic analyzer according to a second embodiment of the present invention; and
Fig. 4 is a diagram schematically illustrating the configuration of a sample vessel and a sample vessel holder.

### DETAILED DESCRIPTION OF THE PREFERRED EMBODIMENTS

A first embodiment of the present invention will be described as below.

### First Embodiment

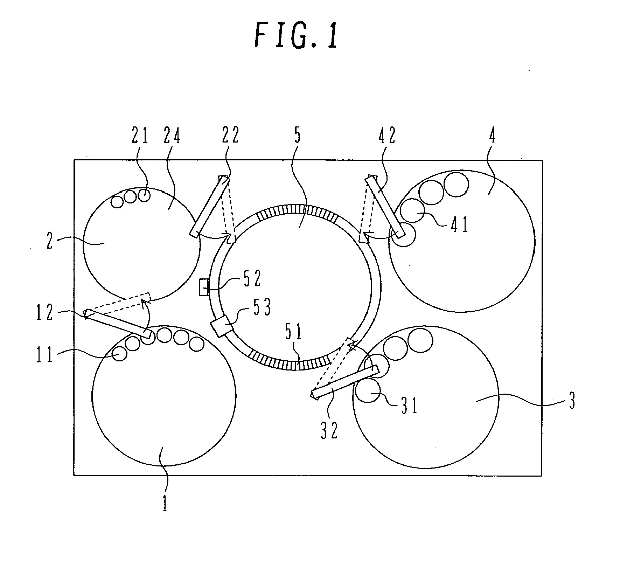

Fig. 1 is a diagram illustrating the overall configuration of an automatic analyzer according to the first embodiment. The automatic analyzer according to the present invention includes: a sample compartment 1 in which a sample vessel containing a biologically-derived sample is placed; a pipetted-sample compartment 2 in which a test sample vessel to contain a sample pipetted from the sample vessel is placed (it is also referred to as a "sample table" 2); a first reagent compartment 3 and a second reagent compartment 4 in both of which a plurality of reagent vessels each containing a reagent is placed; and a reaction compartment 5 in which a sample and reagents are put into a reaction cell to cause reaction thereof, the sample being dispensed from a test sample vessel 21 of the pipetted-sample compartment 2, the reagents being dispensed from reagent vessels of the first and second reagent compartments.

For example, 100 sample vessels 11 per circle, which are aligned in two rows, are placed along the circumference of the sample compartment 1. The sample vessels 11 are fed step by step at specified speed. A specified amount of the sample placed in the sample vessel 11 is absorbed by a dispensing pipette 12 and is then discharged into the test sample vessel 21 at a specified position of the pipetted-sample compartment 2. The pipetted sample is absorbed from the test sample vessel 21 by a sample pipette 22 and is then put into the reaction cell 51 of the reaction compartment 5. Not only the dispensing pipette 12 and the sample pipette 22, but also a sample vessel cleaning unit 24, are located around the pipetted-sample compartment 2 so that the test sample vessel 21 is cleaned. After the dispensing of the sample, the first reagent and the second reagent, which have been sampled from the reagent vessels 31 and 41 by the reagent pipettes 32 and 42, respectively, are each dispensed into the reaction cell 51 at a specified position so as to cause reaction thereof for a specified period of time. After the lapse of the specified period of time, a detector 52 measures the absorbance or the like to detect the reaction. Then, the reaction cell 51 for which detection has been completed is cleaned by a reaction vessel (cell) cleaning unit 53.

The pipetted-sample compartment 2 has a structure that is capable of holding, for example, 100 test sample vessels per circle. Serial numbers from 1 to 100 are assigned to the test sample vessels 21. In the case of the automatic analyzer according to Claim 1 of the present invention, for example, 10 test sample vessels numbered 91 through 100 are used to pipet standard solution for calibration measurement into, whereas 90 test sample vessels numbered 1 through 90 are used to pipet general samples into.

In the first embodiment, when the general samples are analyzed, the pipetted-sample compartment 2 is transferred to a sample discharge position of the dispensing pipette 12 step by step. To be more specific, the sample vessels are used in number order, i.e., 1, 2, 3, .... When analysis of a calibrator is requested, subsequent to a sample vessel (for example, the number 10) containing a dispensed general sample, the pipetted-sample compartment 2 transfers a sample vessel used for the calibrator (for example, the number 91) to a sample discharge position to pipet the calibrator. The dispensing pipette 12 then pipets the calibrator into the sample vessel 91. When the general samples are analyzed next, a sample vessel used for the general samples (for example, the number 11) is transferred to a sample discharge position.

When a biologically-derived sample is pipetted into the test sample vessel 21 in the pipetted-sample compartment 2, the sample pipetted from the sample vessel 11 may also be mixed with a diluted solution in the test sample vessel 21 to make a diluted sample.

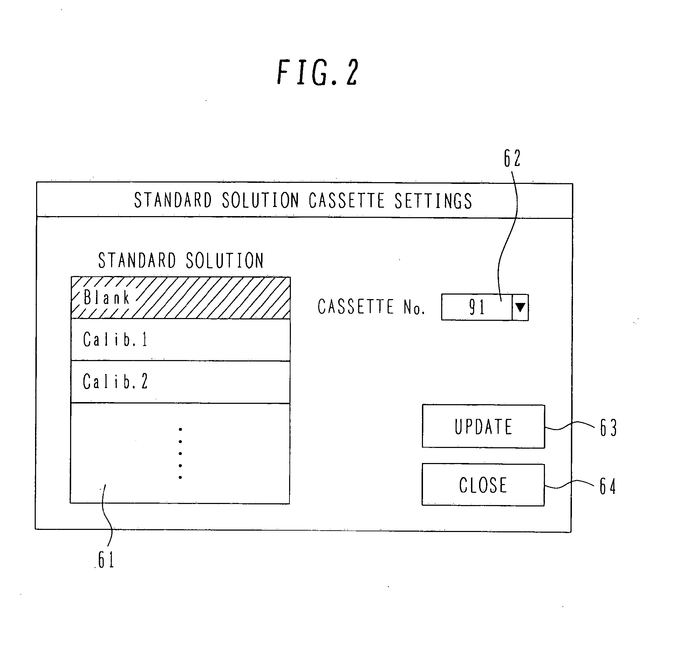

In the case of an automatic analyzer according to Claim 2, an operator can arbitrarily specify a sample vessel used for the standard solution from the sample vessels numbered 1 through 100 on a operation screen. Fig. 2 is a diagram illustrating an example of an operation screen on which a sample vessel used for the calibrator is specified. Standard solution to be specified is selected from a standard solution list 61 on a standard solution vessel setting screen; a vessel number to be specified is selected from a vessel number pull down list 62, which is displayed on the right side of the standard solution list 61. After the selection, when an "Update" button 63 is pressed, settings of the standard solution are stored. Then, the next standard solution can be set on the same setting screen. After all of required standard solutions are set, if a "Close" button 64 is pressed, the standard solution vessel setting screen is closed, thus completing the settings.

In addition, in the case of an automatic analyzer according to Claim 3, a sample vessel which is common to the general samples is used for pipetting a control sample to be measured for the purpose of keeping track of the state of the automatic analyzer. If the measurement result of the control sample deviates from a reference value, an alarm is raised to prompt the operator to replace the sample vessel.

### Second Embodiment

A second embodiment of the present invention will be described below.

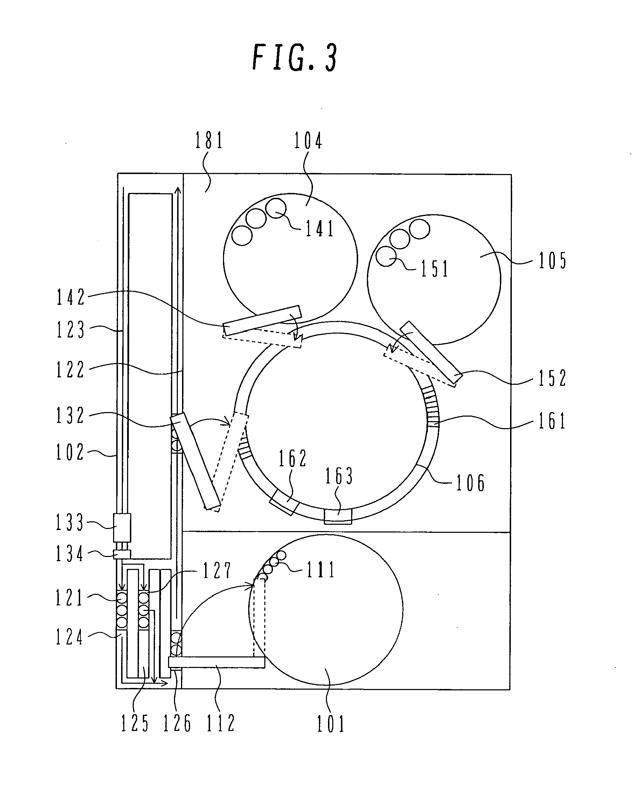

Fig. 3 is a diagram illustrating the overall configuration of an automatic analyzer according to the second embodiment. The automatic analyzer according to the present invention includes a sample compartment 101 in which a sample vessel 111 containing a biologically-derived sample is placed; a pipetted-sample transfer line 102 in which a test sample vessel 121 to contain a sample pipetted from the sample vessel 111 is placed; a first reagent compartment 104 and a second reagent compartment 105 in both of which a plurality of reagent vessels each containing a reagent is placed; and a reaction compartment 106 in which a sample and reagents are put into a reaction cell to cause reaction thereof, the sample being dispensed from a sample vessel in the pipetted-sample transfer line 102, the reagents being dispensed from reagent vessels of the first and second reagent compartments. In addition, an analysis unit 181, which includes the first reagent compartment 104, the second reagent compartment 105, and the reaction compartment 106, may be located plurally along the pipetted-sample transfer line 102. A sample pipette 132 is located at a position adjacent to the pipetted-sample transfer line 102 of the analysis unit 181. The sample pipette 132 dispenses a sample from the test sample vessel 121 in the pipetted-sample transfer line 102 into the reaction cell 161. After the dispensing of the sample, the first reagent and the second reagent, which have been sampled from the reagent vessels 141 and 151 by the reagent pipettes 142 and 152, respectively, are each dispensed into the reaction cell 161 at a specified position, so as to cause reaction thereof for a specified period of time. After the lapse of the specified period of time, a detector 162 measures the absorbance or the like to detect the reaction. Then, the reaction cell 161 for which detection has been completed is cleaned by a cleaning unit 163.

The pipetted-sample transfer line 102 further includes a main transfer line 122, a result-waiting buffer line 123, a dispensing-waiting line 124, a dispensing-waiting line for standard solution 125, and a dispensing line 126. The test sample vessel 121 is transferred through each of the lines with the test sample vessel 121 held by a vessel holder 127. The vessel holder 127 holds, for example, three test sample vessels 121. The vessel holder 127 is provided with ID used to identify each test sample vessel. According to the ID information, each test sample vessel is transferred to a specified position at which sample pipetting, dispensing by the analysis unit 181, or the like, is performed.

The specified amount of a sample placed in the sample vessel 101 is absorbed by a dispensing pipette 112 and then discharged into the test sample vessel 121 at a specified position of the dispensing line 126. The pipetted sample is transferred to the analysis unit 181 through the main transfer line 122. After that, the pipetted sample is absorbed from the test sample vessel 121 by the sample pipette 132 and then put into the reaction cell 161 of the reaction compartment 106. Not only the dispensing pipette 112 and the sample pipette 132 of the analysis unit 181 but also a sample vessel cleaning unit 133 are located around the pipetted-sample transfer line 102 so that the test sample vessel 121 is cleaned. After the dispensing of the sample, the first reagent and the second reagent, which have been sampled from the reagent vessels 141 and 151 by the reagent pipettes 142 and 152, respectively, are each dispensed into the reaction cell 161 at a specified position so as to cause reaction thereof for a specified period of time. After the lapse of the specified period of time, the detector 162 measures the absorbance or the like to detect the reaction. Then, the reaction cell 161 for which detection has been completed is cleaned by a reaction cell cleaning unit 163.

The pipetted-sample transfer line 102 is capable of accommodating, for example, 100 vessel holders 127. In other words, it is capable of holding 300 test sample vessels 121. A unique ID is assigned to each of the vessel holders 127. Each of the test sample vessels 121 is identified by ID assigned to each of the vessel holders 127 and a position in the vessel holder 127 in question. To be more specific, ID numbers 1 through 100 are assigned to the 100 vessel holders respectively; numbers 1 through 300 are assigned respectively to the 300 test sample vessels held by the vessel holders. For example, number 3 is assigned to the test sample vessel that is located at the position 3 in the vessel holder whose ID number is 1.

In the case of the automatic analyzer according to Claim 1 of the present invention, for example, 20 test sample vessels numbered 281 through 300 are used to pipet standard solution for calibration measurement into, whereas 280 test sample vessels numbered 1 through 280 are used to pipet general samples into.

In the second embodiment, when the general samples are analyzed, the pipetted-sample transfer line 102 sequentially transfers the test sample vessels 121 to a sample discharge position of the dispensing pipette 112 located in the dispensing line 126. Before a sample is discharged, a sample vessel ID reading unit 134 is located. Before a sample is pipetted into a test sample vessel 121, its sample vessel ID is read out. The sample vessel ID is then recorded in a database in connection with the sample that has been discharged into the test sample vessel. Therefore, it is not always necessary to align the test sample vessels 121, which are located in the pipetted-sample transfer line 102, in the order of the ID numbers.

Until the test sample vessel 121 is transferred to the dispensing line transfer 125, it stands by in the dispensing-waiting line 124. When pipetting of a sample is planned, the test sample vessel 121 is transferred from the dispensing-waiting line 124 to the dispensing line 126.

On the other hand, a test sample vessel specified for standard solution stands by in the dispensing-waiting line for standard solution 125. The dispensing-waiting line for standard solution 125 is constituted of two lines, a waiting line and a carrying-out line. If pipetting of a standard solution is planned for calibration, a sample vessel to be used for the standard solution, which is located in the waiting line, is transferred from the carrying-out line to the dispensing line 126.

When a biologically-derived sample is pipetted into a test sample vessel 121, the sample pipetted from the sample vessel 111 may also be mixed with a diluted solution in the test sample vessel 121 to make a diluted sample.

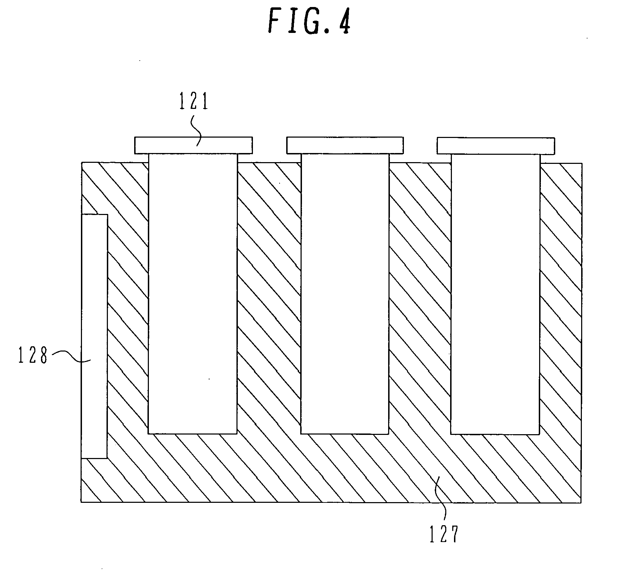

Fig. 4 is a diagram illustrating the vessel holder 127. The vessel holder 127 is configured to hold three test sample vessels 121 on the upper part of the vessel holder 127. An IC tag 128 to which ID information is written is embedded on the side of the vessel holder 127.

As is the case with the first embodiment, the automatic analyzer according to Claim 2 allows the operator to arbitrarily specify a test sample vessel used for the standard solution from the test sample vessels numbered 1 through 200 on an operation screen. Fig. 2 is a diagram illustrating an example of the operation screen on which a test sample vessel used for the calibrator is specified.

In addition, in the case of an automatic analyzer according to Claim 3, a sample vessel which is common to the general samples is used for pipetting a control sample to be measured for the purpose of keeping track of the state of the automatic analyzer. If the measurement result of the control sample deviates from a reference value, an alarm is raised to prompt the operator to replace the sample vessel.

## Claims

1. An automatic analyzer comprising a sample table on which a plurality of vessels are placed each of which temporarily holds a sample and is repeatedly cleaned and used, said automatic analyzer comprising:
a control mechanism for controlling a vessel for holding a sample whose concentration is known so that the vessel in question is used separately from a vessel for holding a general sample.

2. The automatic analyzer according to Claim 1, further comprising:
specification means for specifying a vessel for holding the sample whose concentration is known.

3. The automatic analyzer according to Claim 1, further comprising:
storage means for storing the measurement result of the sample whose concentration is known and information about the sample vessel used for the measurement; and
message issuing means for, on the basis of the measurement result of the sample whose concentration is known, issuing a message for promoting the replacement of the sample vessel used for the measurement.

4. The automatic analyzer according to Claim 1, wherein:
said sample vessel includes identification information storage means for storing identification information used to identify the sample vessel.

5. The automatic analyzer according to Claim 4, wherein:
said identification information storage means is a bar code or an IC tag.
